(19) Europäisches Patentamt
European Patent Office
Office européen des brevets

(11) Veröffentlichungsnummer: **0 159 288**
**B1**

# (12) EUROPÄISCHE PATENTSCHRIFT

(45) Veröffentlichungstag der Patentschrift: **27.04.88**

(51) Int. Cl.[4]: **C 08 F 283/00,** C 08 F 283/10, C 08 G 8/38, C 08 G 14/14

(21) Anmeldenummer: **85810113.2**

(22) Anmeldetag: **15.03.85**

## (54) Verfahren zur Herstellung von mit Wasser verdünnbaren harzartigen Produkten und deren Verwendung in Überzugsmassen.

(30) Priorität: **21.03.84 GB 8407283**

(43) Veröffentlichungstag der Anmeldung: **23.10.85 Patentblatt 85/43**

(45) Bekanntmachung des Hinweises auf die Patenterteilung: **27.04.88 Patentblatt 88/17**

(84) Benannte Vertragsstaaten: **BE CH DE FR GB IT LI NL SE**

(56) Entgegenhaltungen:
**EP-A-0 051 561**
**EP-A-0 067 312**
**FR-A-2 519 011**
**FR-A-2 523 980**

(73) Patentinhaber: **CIBA- GEIGY AG, Klybeckstrasse 141, CH- 4002 Basel (CH)**

(72) Erfinder: **Demmer, Christopher George, Dr., 20 Wolsey Way, Cherry Hinton Cambridge CB1 3JQ (GB)**
Erfinder: **Hathaway, Roderick Donald, 65 Sedgwick Street, Cambridge CB1 3AJ (GB)**

**EP 0 159 288 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die vorliegende Erfindung betrifft ein Verfahren zur Herstellung von neuen mit Wasser verdünnbaren harzartigen Produkten, einschliesslich wasserlöslicher und in Wasser dispergierbarer Produkte, solche Produkte enthaltende Zubereitungen und mit diesen Zubereitungen beschichtete Oberflächen.

Zum Erzielen korrosionsbeständiger Beschichtungen auf Metallbehältern wird die Metalloberfläche üblicherweise mit einer in einem organischen Lösungsmittel gelösten vernetzbaren Harz-Formulierung beschichtet, worauf man die Beschichtung erhitzt. Dabei wird das Lösungsmittel verdampft und das Harz vernetzt. Durch die Vernetzung verwandelt sich die Beschichtung in einen zähen, auf dem Substrat haftenden, flexiblen und schützenden Film. Während des Erhitzens wird das Lösungsmittel üblicherweise in die Atmosphäre verdampft. Da organische Lösungsmittel relativ teuer, entzündbar und im allgemeinen vom ökologischen Standpunkt aus unerwünscht sind, besteht ein Bedürfnis nach Beschichtungen, die unter Verwendung von möglichst geringen Anteilen solcher Lösungsmittel appliziert werden können. Besonders erwünscht sind Überzugsmassen mit einem hohen Wassergehalt.

Gemäss US-PS-4 362 853 werden harzartige Salze durch Mannich-Reaktion von Harzen mit endständigen Phenolgruppen mit einer Aminosäure und einem Aldehyd hergestellt, wobei die durch die Aminosäure eingeführte(n) Carboxylgruppe(n) teilweise oder ganz neutralisiert werden.

In der deutschen Offenlegungsschrift Nr. 3 247 281 sind harzartige Salze beschrieben, die entweder durch Thioalkylierung von Harzen mit endständigen Phenolgruppen mit Mercaptocarbonsäuren und Aldehyden und mindestens teilweise Neutralisierung der durch die Mercaptocarbonsäure eingeführten Carboxylgruppen oder durch Sulfoalkylierung von Harzen mit endständigen Phenolgruppen mit Schwefelsäure (oder einem wasserlöslichen Salz davon) und Aldehyden und anschliessend notigenfalls mindestens teilweise Neutralisierung der durch Schwefelsäure oder deren Salze eingeführten Sulfonsäuregruppen hergestellt werden.

Weitere harzartige Salze sind in der britischen Patentanmeldung Nr. 2 118 936 A beschrieben. Diese Salze werden durch Mannich-Reaktion von Harzen mit endständigen Phenolgruppen mit einem Aldehyd und einer Aminophosphonsäure oder einer Aminosulfonsäure, gefolgt von teilweiser oder vollständiger Neutralisation der durch diese Reaktion eingeführten sauren Gruppen hergestellt.

Alle diese Patentschriften bwz. Patentanmeldungen offenbaren die Verwendung von harzartigen Salzen allein oder zusammen mit Aminoplasten, Phenoplasten oder verkappten Polyisocyanaten in wässrigen Oberflächenbeschichtungsmitteln.

Gemäss dem in der der US-PS Nr. 4 308 185 beschriebenen Verfahren werden Epoxidharze mit einem zur Additionspolymerisation befähigten Monomer zu Pfropfpolymeren umgesetzt. Zur Herstellung von in Wasser dispergierbaren Produkten werden Monomere mit Carboxylfunktionen verwendet. Um die Reaktion der Epoxidgrupen des Harzes mit den Carboxylgrupen des Monomers in Grenzen zu halten, wird das Harz unter Eliminierung einiger oder aller Epoxidgruppen mit einem Kettenabbruchmittel, z.B. Bisphenol A, umgesetzt.

Es wurde nun gefunden, dass die Eigenschaften von harzartigen Reaktionsprodukten aus Harzen mit endständigen Phenolgruppen, Aldehyden und Säuren oder Salzen, wie die der oben beschriebenen Art, dadurch verbessert werden können, dass man das Harz mit den endständigen Phenolgruppen oder einen Vorläufer davon vor der Umsetzung mit dem Aldehyd und der Säure (oder dem Salz) mit einem Vinylmonomeren modifiziert. Insbesondere können durch Verwendung dieser modifizierten Produkte wässrige Überzugsmittel mit erhöhter Viskosität bei einem bestimmten Feststoffgehalt bereitgestellt und Beschichtungen mit verbesserter Säurebeständigkeit erhalten werden. Den oben diskutierten Literaturstellen ist kein Hinweis zu entnehmen, dass eine derartige Modifikation zu vorteilhaften Ergebnissen führen würde.

Gegenstand vorliegender Erfindung ist somit ein Verfahren zur Herstellung von mit Wasser verdünnbaren harzartigen Produkten, indem man

(A) ein Harz mit mindestens einer phenolischen Hydroxylgruppe und einer freien Stellung in ortho- und/oder para-Stellung zur phenolischen Hydroxylgruppe, das einen durch Polymerisation eines Vinylmonomers im Harz oder einem Vorläufer davon gebildeten Rest enthält,

(B) einen Aldehyd und

(C) Schwefelsäure oder eine organische Säure mit einer primären oder sekundären Aminogruppe oder einer Mercaptangruppe und einer Carbonsäure-, Sulfonsäure- oder Phosphonsäuregruppe, oder ein wasserlösliches Salz davon miteinander umsetzt.

Gegenstand der Erfindung sind auch die nach dem erfindungsgemässen Verfahren erhältlichen neuen in Wasser dispergierbaren harzartigen Produkte.

Die Harze (A) weisen im allgemeinen 1-4 phenolische Hydroxylgruppen auf. Harze, die durchschnittlich zwischen 1 und 2 phenolische Hydroxylgruppen pro Molekül aufweisen, sind bevorzugt. Bevorzugt leitet sich das Polymer-Gerüst von Epoxid- oder Phenoxyharzen ab. Das durchschnittliche Molekulargewicht der Harze liegt im allgemeinen zwischen 1000 und 10000, besonders zwischen 2000 und 4000.

Als Harze (A) eignen sich beispielsweise Umsetzungsprodukte von Epoxidharzen mit mehrwertigen Phenolen, die in ortho- und/oder para-Stellung zur einer phenolischen Hydroxylgruppe eine freie Stellung aufweisen, zur Herstellung von Harzen mit endständigen Phenolgruppen, in dem dann ein Vinylmonomer polymerisiert wird. Für die Umsetzung der Epoxidharze mit den mehrwertigen Phenolen können an sich bekannte Methoden angewendet werden. Das Epoxidharz ist vorzugsweise ein Diepoxid, und als mehrwertige Phenole werden zweiwertige Phenole bevorzugt. Zur Herstellung von Produkten mit mindestens einer

endständigen phenolischen Hydroxylgruppe müssen auf molarer Basis mindestens gleiche Mengen an zweiwertigem Phenol und Diepoxid eingesetzt werden. Das Molverhältnis des Diepoxids zum zweiwertigen Phenol liegt im allgemeinen zwischen 1 : 1,02 bis 1 : 1,6, besonders 1 : 1,1 bis 1 : 1,5. Die Umsetzung wird vorzugsweise durch Erhitzen der Reaktionspartner auf 100-200°C in Gegenwart einer Base, z.B. einem tertiären Amin, jedoch bevorzugt einem Alkalimetallhydroxid, vorgenommen. Die Umsetzung kann auch in einem inerten Lösungsmittel durchgeführt werden.

Als zweiwertige Phenole für die Umsetzung mit den Epoxidharzen können einkernige Phenole, wie z.B. Hydrochinon oder Resorcin, verwendet werden. Bevorzugt setzt man unsubstituierte oder substituierte Bisphenole, besonders solche der Formel I

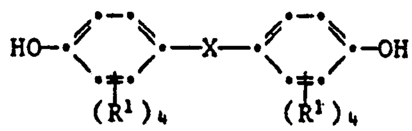

(I)

ein, worin die $R^1$ unabhängig voneinander ein Wasserstoffatom, ein Halogenatom, eine Alkylgruppe mit 1-4 C-Atomen oder eine Alkenylgruppe mit 2-4 C-Atomen darstellen, mit der Massgabe, dass mindestens eine der Gruppen $R^1$ in ortho-Stellung zu einer phenolischen Hydroxylgruppe ein Wasserstoffatom bedeutet, und X eine Alkenyl- oder Alkylidengruppe mit 1-3 Atomen, eine Carbonyl- oder Sulfonylgruppe, ein Sauerstoff- oder Schwefelatom oder eine kovalente Bindung darstellt.

Als Beispiele von besonders bevorzugten Bisphenolen seien Bis(4-hydroxyphenyl)methan und 2,2-Bis(4-hydroxyphenyl)propan erwähnt.

Als Epoxidharze (Polyepoxide) für die Umsetzung mit den zweiwertigen Phenolen werden solche mit zwei endständigen, direkt an ein O-, H- oder S-Atom gebundenen Glycidylgruppen bevorzugt.

Als Beispiele solcher Harze seien Polyglycidylester genannt, die durch Reaktion einer pro Molekül zwei Carbonsäuregruppen enthaltenden Verbindung mit Epichlorhydrin oder Glycerindichlorhydrin in Gegenwart einer Base erhalten werden. Derartige Polyglycidylester können sich von aliphatischen Polycarbonsäuren ableiten, wie z.B. Oxalsäure, Bernsteinsäure, Glutarsäure, Adipinsäure, Pimelinsäure, Suberinsäure, Azelainsäure, Sebacinsäure und dimerisierter Linolsäure; von cycloaliphatischen Polycarbonsäuren, wie Tetrahydrophthalsäure, 4-Methyltetrahydrophthalsäure, Hexahydrophthalsäure und 4-Methylhexahydrophthalsäure, sowie von aromatischen Polycarbonsäuren, wie Phthalsäure, Isophthalsäure und Terephthalsäure.

Weitere Beispiele sind Polyglycidyläther, die durch Reaktion einer pro Molekül mindestens zwei freie alkoholische oder phenolische Hydroxylgruppen enthaltenden Verbindung mit Epichlorhydrin oder Glycerindichlorhydrin in basischem Medium oder in Gegenwart eines sauren Katalysators und anschliessende Behandlung mit Base erhalten werden. Diese Äther können hergestellt werden aus: acyclischen Alkoholen, wie Äthylenglykol, Diäthylenglykol und höheren Poly(oxyäthylen)glykolen, Propan-1,2-diol und Poly(oxypropylen)glykolen, Propan-1,3-diol, Butan-1,4-diol, Poly(oxytetramethylen)glykolen, Pentan-1,5-diol und Polyepichlorhydrinen; cycloaliphatischen Alkoholen, wie Resorcitol, Chinitol, Bis-(4-hydroxycyclohexyl)methan, 2,2-Bis-(4-hydroxycyclohexyl)propan und 1,1-Bis-(hydroxymethyl)-cyclohex-3-en; von Alkoholen mit aromatischen Kernen, wie N,N-Bis-(2-hydroxyäthyl)-anilin und p,p'-Bis-(2-hydroxyäthylamino)diphenylmethan Derartige. Äther können auch aus einkernigen Phenolen, wie Resorcin und Hydrochinon, oder aus mehrkernigen Phenolen, wie Bis-(4-hydroxyphenyl)-methan, 4,4'-Dihydroxydiphenyl, Bis-(4-hydroxyphenyl)sulfon, 2,2-Bis(4-hydroxyphenyl)propan, 2,2-Bis-(3,5-dibrom-4-hydroxyphenyl)propan und 2,2-Bis-(2-allyl-4-hydroxyphenyl)propan hergestellt werden.

Beispiele von Poly(N-glycidyl)-Verbindungen sind solche, die durch Dehydrochlorierung der Reaktionsprodukte aus Epichlorhydrin und Aminen mit zwei Amin-Wasserstoffatomen, wie Anilin, n-Butylamin und Bis-(4-methylaminophenyl)methan, erhalten werden; ferner N,N'-Diglycidylderivate von cyclischen Alkylenharnstoffen, wie Äthylenharnstoff und 1,3-Propylenharnstoff, oder von Hydantoinen, wie 5,5-Dimethylhydantoin.

Beispiele von Poly(S-glycidyl)-Verbindungen sind Di-S-glycidylderivate von Dithiolen, wie Äthan-1,2-dithiol und Bis-(4-mercapto-methylphenyl)äther. Es können auch Polyepoxide verwendet werden, bei denen die 1,2-Epoxidgruppen an verschiedene Heteroatome gebunden sind, z.B. der Glycidyläther-glycidylester der Salicylsäure, N-Glycidyl-N'(2-glycidyloxypropyl)-5,5-dimethylhydantoin und 2-Glycidyloxy-1,3-bis-(5,5-dimethyl-1-glycidylhydantoin-3-yl)-propan.

Ferner können Polyepoxide mit nicht endständigen Epoxidgruppen eingesetzt werden, wie Vinylcyclohexendioxid, Limonendioxid, Dicyclopentadienoxid, 4-Oxatetracyclo[6.2.1.0$^{2.7}$,0$^{3.5}$]-undec-9-yl-glycidyläther, der Bis-(4-oxatetracylo-[6.2.1.0$^{2.7}$,0$^{3.5}$]undec-9-yl-äther des Äthylenglykols, 3,4-Epoxycyclohexylmethyl-3',4'-epoxycyclohexan-carboxylat und dessen 6,6'-Dimethylderivat, das Bis(3,4-Epoxycyclohexancarboxylat) des Äthylenglykols und 3-(3,4-Epoxycyclohexyl)-8,9-epoxy-2,4-dioxaspiro[5,5]undecan.

Falls erwünscht können auch Gemische verschiedener Diepoxide verwendet werden. Es können auch Polyepoxide mit mehr als zwei Epoxidgruppen eingesetzt werden; dem Epoxidfachmann ist jedoch bekannt,

dass die Umsetzung solcher Polyepoxide mit mehrfunktionellen Verbindungen wegen der Gelierungsgefahr eher schwierig ist.

Bevorzugte Diepoxide sind Diglycidyläther und -ester. Besonders bevorzugte Diepoxide sind die Diglycidyläther von 2,2-Bis-(4-hydroxy-phenyl)-propan und Bis-(4-hydroxyphenyl)methan mit einem 1,2-Epoxidgehalt von mehr als 1,0 Äquivalenten pro Kilogramm.

Das zweiwertige Phenol kann allein oder gewünschtenfalls in Gegenwart einer Verbindung eingesetzt werden, welche mit einer Epoxidgruppe des Polyepoxids reagiert, jedoch nicht weiter reagiert und so eine zusätzliche Kettenverlängerung verhindert. Geeignete Kettenabbruchmittel sind z.B. sekundäre Monoamine, Monocarbonsäuren und besonders einwertige Phenole; p-tert-Butylphenol ist besonders bevorzugt. Das Kettenabbruchmittel muss in einer solchen Menge verwendet werden, dass mindestens eine der Epoxidgruppen pro Durchschnittsmolekül des Polyepoxids für die Reaktion mit dem zweiwertigen Phenol frei bleibt.

Als Harze (A) können auch Produkte eingesetzt werden, die durch Polymerisieren eines Vinylmonomers in einem Epoxidharz mit einer sekundären alkoholischen Hydroxylgruppe und anschliessende Umsetzung des erhaltenen Produkts mit einem mehrwertigen Phenol mit einer freien Stellung in ortho- und/oder para-Stellung zu einer phenolischen Hydroxylgruppe zu Harzen mit endständigen Phenolgruppen erhalten werden. Die Umsetzung des Epoxidharzes, welches das in situ polymerisierte Vinylmonomer enthält, mit dem mehrwertigen Phenol, bevorzugt zweiwertigen Phenolen, kann unter ähnlichen Bedingungen, wie für die oben beschriebene Umsetzung der Epoxidharze mit den mehrwertigen Phenolen unter Verwendung derselben zweiwertigen Phenole und gewünschtenfalls eines Kettenabbruchmittels vorgenommen werden.

Als Epoxidharze mit einer sekundären alkoholischen Hydroxylgruppe kommen Polyglycidylester, Polyglycidyläther oder Poly(N-glycidyl)verbindungen der oben beschriebenen Art in Betracht, die sich von Epichlorhydrin und einem Überschuss an Polycarbonsäure, mehrwertigem Alkohol oder Phenol oder einer Stickstoffverbindung ableiten. Es kann sich auch um Harze handeln, die durch Vorverlängerung der oben beschriebenen Epoxidharze, bevorzugt Harzen mit zwei endständigen Glycidylgruppen wie oben beschrieben, mit einer solchen Menge eines Vorverlängerungsmittels mit mindestens zwei zur Umsetzung mit Epoxidgruppen befähigten reaktiven Gruppen hergestellt werden, dass Produkte mit endständigen Epoxidgruppen erhalten werden. Als Beispiele von geeigneten Vorverlängerungsmitteln seien mehrfunktionelle, besonders bifunktionelle Alkohole, Carbonsäuren, Amine, Mercaptane und besonders Phenole erwähnt. Als zweiwertige Phenol werden solche der oben angegebenen Formel I bevorzugt. Die Bedingungen für die Vorverlängerungsreaktionen entsprechen im wesentlichen den oben für die Herstellung der aus einem Epoxidharz und einem zweiwertige Phenol erhaltenen Umsetzungsprodukte mit endständigen Phenolgruppen angegebenen mit der Ausnahme, dass das Verhältnis der chemischen Äquivalente Vorverlängerungsmittel: Epoxidharz im allgemeinen im Bereich von 1 : 1,02 bis 1 : 1,6, besonders 1 : 1,1 bis 1 : 1,5 liegt.

Als Harze (A) eignen sich ferner solche, die durch Polymerisation von Vinylmonomeren in Phenoxyharzen erhalten werden, d.h. Harzen mit endständigen Phenolgruppen analog den aus Bisphenoldiglycidyläther und Bisphenolen erhaltenen Harzen, jedoch hergestellt durch direkte Umsetzung eines Bisphenols mit Epichlorhydrin. Die Umsetzung zu den Phenoxyharzen wird zweckmässig in alkalischem Medium unter Verwendung von im wesentlichen äquimolaren Mengen Bisphenol und Epichlorhydrin durchgeführt, wobei beim Erreichen des gewünschten Molekulargewichts ein Kettenabbruchmittel, z.B. ein einwertiges Phenol, zugegeben wird.

Wie oben erläutert, kann das Vinylmonomer in dem Harz mit endständigen Phenolgruppen oder in einem Epoxidharz-Vorläufer davon polymerisiert werden. Die Monomeren können, zusammen mit einem freie Radikale bildenden Initiator, mit dem Harz oder einer Lösung des Harzes in einem organischen Lösungsmittel, wie n-Butanol, 2-Äthoxyäthanol, 2-Butoxyäthanol, Äthylacetat, Toluol, Xylol oder Tetrahydrofuran, vermischt werden.

Die in-situ-Polymerisation kann z.B. durch Erhitzen des Gemisches auf Temperaturen zwischen 60 und 200°C, bevorzugt 100 und 150°C, im allgemeinen während 1-10 Stunden durchgeführt werden. Das Monomer kann in einer solchen Menge verwendet werden, dass dieses bis zu 50 Gew.-% des Harzes (A) ausmacht, d.h. des Gesamtgewichts aus Harz mit endständigen Phenolgruppen und dem polymerisierten Vinylmonomer. Mengen von bis zu 40 Gew.%, besondere 10-30 Gew.-%, bezogen auf das Gewicht des Harzes (A), sind bevorzugt. So kann das Monomer beim Polymerisieren in dem Harz mit endständigen Phenolgruppen in Mengen von bis zu 100 Gew.-% dieses Harzes, eingesetzt werden, wobei Mengen von bis zu 67 Gew.-% und besonders 11-43 Gew.-%, bevorzugt sind. Der freie Radikale bildende Initiator liegt im allgemeinen in Mengen von 1-20 Gew.-%, besonders 2-10 Gew.-%, bezogen auf das Gewicht des Monomeren, vor. Das Monomer und/oder der Initiator können dem Harz in zwei oder mehr Stufen zugegeben werden, wobei das Gemisch zweckmässig nach jedem Zusatz 1-3 Stunden erhitzt wird.

Als Vinylmonomeren eignen sich z.B. Styrole, wie Styrol selber, ring-substituierte Styrole, wie 4-Methylstyrol und 4-Bromstyrol, sowie α und β-substituierte Styrole, wie α-Methylstyrol und β-Methylstyrol; Acrylsäure, Methacrylsäure und Ester davon, wie z.B. Alkylester, besonders Alkylester mit 1-6 C-Atomen in der Alkylgruppe, wie Äthylacrylat und Methylmethacrylat, ferner Hydroxyalkylester, besonders die Hydroxyäthyl- und Hydroxypropylester; Acrylamid, Methacrylamid und Hydroxyalkylderivate davon, wie N-Methylolacrylamid; ferner Vinylester von Carbonsäuren, wie Vinylacetat und Vinylpropionat. Es können auch Gemische aus zwei oder mehr Vinylmonomeren verwendet werden. Besonders bevorzugt sind Styrol,

Methylmethacrylat und Gemische aus diesen Verbindungen.

Als freie Radikale bildende Polymerisationsinitiatoren eignen sich z.B. anorganische oder organische Peroxide. Als Beispiele von anorganischen Peroxiden seien Wasserstoffperoxid und Persulfate, wie Kalium- und Natriumpersulfat, genannt. Beispiele von organischen Peroxiden sind Acylperoxide, wie Benzoylperoxid, p-Chlorbenzoylperoxid und t-Butylperbenzoat, Ketonperoxide, wie Methyläthylketonperoxid und Cyclohexanonperoxid, sowie Hydroperoxide, wie Cumolhydroperoxid und t-Butylhydroperoxid. Als Inititatoren eignen sich auch Azoverbindungen wie z.B. Azobis(isobutyronitril) und Azobis(α-methylbutryronitril). Bevorzugte Initiatoren sind Benzoylperoxid, Cumolhydroperoxid und Azobis(isobutyronitril).

Als Aldehyde (B) für die Umsetzung mit den Harzen (A) und den Säuren (oder Salzen) (C) zur Herstellung der mit Wasser verdünnbaren Produkte verwendet man vorzugsweise aliphatische Aldehyde, besonders Aldehyde mit 1-6 C-Atomen. Es können jedoch auch aromatische Aldehyde, besonders solche mit 7-12 C-Atomen, eingesetzt werden. Formaldehyd, der zweckmässig in situ aus Paraformaldehyd gebildet wird, ist besonders bevorzugt.

Als Säuren (C) eignen sich z.B. Aminosulfon- und Aminophosphonsäuren. Die Amino-, Sulfonsäure- und Phosphonsäuregruppen können an aliphatische, aromatische oder araliphatische Reste gebunden sein. Als derartige Säuren kommen beispielsweise solche der Formel II

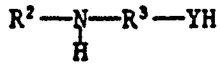

(II)

in Betracht, worin

$R^2$ ein Wasserstoffatom oder eine Alkylgruppe mit 1-6 C-Atomen,

$R^3$ einen aliphatischen, aromatischen oder araliphatischen zwei- oder dreiwertigen Kohlenwasserstoffrest mit bis zu 10 C-Atomen, der freie Sulfon- oder Phosphonsäuregruppen enthalten kann, und

Y den nach Entfernen eines Wasserstoffatoms erhaltenen Rest einer Sulfon- oder Phosphonsäuregruppe, d.h. z.B. $-SO_3-$ oder $-PO_2H-$, bedeuten.

Beispiele von Aminosulfonsäuren der Formel II sind Sulfanilsäure, Taurin, o-Anilsäure und 2-Aminobenzol-1,4-disulfonsäure.

Als Aminophosphonsäuren der Formel II eignen sich z.B. solche der Formel III

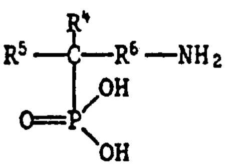

(III),

worin entweder

$R^4$ eine Alkylgruppe mit 1-4 C-Atomen, eine Arylgruppe mit 6-10 C-Atomen oder eine freie Phosphonsäuregruppe der Formel $-P(:O)(OH)_2$,

$R^5$ ein Wasserstoffatom, eine Alkylgruppe mit 1-4 C-Atomen, eine Arylgruppe mit 6-10 C-Atomen und

$R^6$ eine direkte Bindung oder eine Alkylengruppe mit 1-4 C-Atomen darstellen, oder

$R^4$ und $R^6$ zusammen mit dem C-Atom, an das sie gebunden sind, einen aromatischen Ring bilden und $R^5$ nicht vorhanden ist.

Spezifische Beispiele von Aminophosphonsäuren der Formel III sind 2-Amino-1-phenyläthylphosphonsäure, 1-Aminoäthyliden-bis-(phosphonsäure) und Aminophenylmethylen-bis(phosphonsäure).

Als Säuren eignen sich auch Mercaptocarbonsäuren. In diesen Säuren können die Mercaptan- und Carbonsäuregruppen an aliphatische, aromatische oder araliphatische Reste gebunden sein. Als Mercaptocarbonsäuren können z.B. solche der Formel IV

$HS-R^7-COOH$ (IV)

eingesetzt werden, worin $R^7$ einen aliphatischen, aromatischen oder araliphatischen zweiwertigen Rest mit bis zu 10 C-Atomen, der eine weitere Carbonsäuregruppe enthalten kann, darstellt.

Spezifische Beispiele, von Säuren der Formel IV sind Tioglykolsäure, 2-Mercaptopropionsäure, 3-Mercaptopropionsäure und 2-Mercaptobernsteinsäure (Thioäpfelsäure).

Als Säuren (C) kommen schliesslich auch Aminocarbonsäuren in Betracht. Die Amino- und Carbonsäuregruppen können an aliphatische, aromatische oder araliphatische Reste gebunden sein. Geeignete Aminocarbonsäuren sind z.B. solche der Formel V

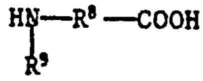

(V),

worin

$R^8$ einen aliphatischen, aromatischen oder araliphatischen Rest mit bis zu 10 C-Atomen, der eine weitere Carbonsäuregruppe enthalten kann, und vorzugsweise Alkylengruppe mit 1-4 C-Atomen oder eine Phenylengruppe darstellt, und

$R^9$ ein Wasserstoffatom, eine Gruppe der Formel VI

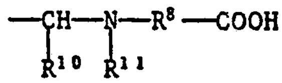

(VI)

oder eine Alkylgruppa mit 1-6 C-Atomen, die durch eine weitere Carbonsäuregruppe oder eine Gruppe der Formeln -CH($R^{10}$)OH oder -CH($R^{10}$)O$R^{12}$ substituiert sein kann, bedeutet, mit der Massgabe, dass $R^8$ und $R^9$ zusammen nicht mehr als eine Carbonsäuregruppe aufweisen,

$R^{10}$ ein Wasserstoffatom, eine Alkylgruppe mit 1-4 C-Atomen oder eine Arylgruppe mit 6-10 C-Atomen darstellt,

$R^{11}$ ein Wasserstoffatom, eine Carbonsäuregruppe oder eine Alkylgruppe mit 1-6 C-Atomen, die durch eine Carbonsäuregruppe oder eine Gruppe der Formeln -CH($R^{10}$)OH oder -CH($R^{10}$)O$R^{12}$ substituiert sein kann, darstellt und

$R^{12}$ eine Alkylgruppe mit 1-6 C-Atomen oder eine Alkoxyalkylgruppe bedeutet, in der die Alkoxy- und Alkylgruppe je 1-6 C-Atome aufweisen.

Als spezifische Aminocarbonsäuren der Formel V seien Sarkosin, Iminodiessigsäure, Anthranilsäure, Glyzin, Glutaminsäure, Asparaginsäure und p-Aminobenzoesäure erwähnt.

Als Salze (C), die im erfindungsgemässen Verfahren verwendet werden können, kommen z.B. die Kalium- und Natriumsalze der oben beschriebenen Säuren sowie Schwefelsäure in Betracht.

Die Komponente (C) ist vorzugsweise eine Aminocarbonsäure oder eine Mercaptocarbonsäure; besonders bevorzugte Säuren sind Glyzin, Glutaminsäure, Asparaginsäure, p-Aminobenzoesäure, Sarkosin und Thioglykolsäure.

Die Umsetzung zwischen dem Harz (A), dem Aldehyd (B) und der Säure oder dem Salz (C) kann durch Erhitzen der Reaktionspartner, üblicherweise in einem inerten Lösungsmittel, und bevorzugt in Gegenwart einer Base in einer für eine mindestens teilweise Neutralisierung allfällig vorhandener freier Säure ausreichenden Menge durchgeführt werden. Die Reaktionstemperaturen liegen im allgemeinen zwischen 60 und 180°C, besonders 75 und 140°C. Die Umsetzung ist üblicherweise innerhalb von 15 Minuten bis 8 Stunden beendet.

Falls erforderlich kann dem Reaktionsprodukt eine Base oder weitere Base zugegeben werden, um dessen Verdünnbarkeit in Wasser zu verbessern. Im allgemeinen werden mindestens 25 % der im Reaktionsprodukt vorhandenen sauren Gruppen neutralisiert, wobei ein in Wasser vollständig verdünnbares Produkt erhalten wird, der Grad der Neutralisierung kann jedoch je nach Art des Reagens (C) variieren.

Als inerte Lösungsmittel eignen sich z.B. Kohlenwasserstoffe, Äther, Alkohole und Ester. Toluol, Xylol, Tetrahydrofuran, Äthylacetat und vor allem 2-Buthoxyäthanol und n-Butanol sind bevorzugt. Als Basen für die mindestens teilweise Neutralisierung kommen z.B. Natriumhydroxid, Natriumcarbonat, Kaliumhydroxid, Kaliumcarbonat, Ammoniak, Triäthylamin und Triäthanolamin in Betracht; 2-(Dimethylamino)-2-methylpropan-1-ol und 2-(Dimethylamino)äthanol sind besonders bevorzugt.

Im allgemeinen werden 0,3 bis 2,0 Mol der Säure oder des Salzes (C) pro Mol phenolischer Hydroxylgruppen im Harz (A) verwendet. Der Aldehyd (B) wird üblicherweise im Überschuss eingesetzt, besonders in einer Menge von 1,1 bis 4,0 Mol Aldehyd pro Mol Komponente (C), da die so erhaltenen Produkte eine verbesserte Lagerfähigkeit bei Raumtemperatur-aufweisen. Weist das Harz (A) mehr als eine freie Stellung in ortho- oder para-Stellung zu einer phenolischen Hydroxylgruppe auf, so ergibt die Verwendung eines Ueberschusses an aliphatischem Aldehyd im allgemeinen Produkte mit einer an den Phenolring gebundenen Hydroxyalkylgruppe. Dies als Folge einer Reaktion zwischen dem Harz mit endständigen Phenolgruppen und überschüssigem Aldehyd, wie dies bei der Herstellung von Phenol-Aldehyd-Resolen unter basischen Bedingungen erfolgt. Wird als Aldehyd Formaldehyd eingesetzt, so ist die Hydroxyalkylgruppe selbstredend eine Methylolgruppe.

Die erfindungsgemässen harzartigen Produkte, d.h. die Umsetzungsprodukte aus (A), (B) und (C), können in Form heisshärtbarer Stoffzusammensetzungen für die Oberflächenbeschichtung verwendet werden. Gegenstand vorliegender Erfindung sind somit auch heisshärtbare Stoffzusammensetzungen, enthaltend 100 Gew.teile eines Reaktionsproduktes aus (A), (B) und (C), bezogen auf den Feststoffgehalt (wie im folgenden definiert), und 2-200 Gew.teile, besonders 25-150 Gew.teile, bezogen auf den Feststoffgehalt, eines Aminoplasts, Phenol-Formaldehyd-Harzes oder verkappten Polyisocyanats. Dabei weisen die Aminoplasten und Phenol-Formaldehyd-Harze mindestens zwei Gruppen dar Formel VII

$-CH_2OR^{13}$ (VII)

auf, die direkt an Amidstickstoffatome oder direkt an C-Atome eines phenolischen Rings gebunden sind, und worin $R^{13}$ ein Wasserstoffatom oder eine Alkylgruppe mit 1-6 C-Atomen bedeutet.

Für die Verwendung in derartigen heisshärtbaren Stoffzusammensetzungen weist das Reaktionsprodukt aus (A), (B) und (C) vorzugsweise alkoholische Hydroxylgruppen, wie sekundäre alkoholische Hydroxylgruppen in Resten der Formel $-CH_2-CH(OH)-CH_2-$ in der Polymerkette eines von Epoxid- oder Phenoxyharzen abgeleiteten Produkts, oder an Phenolringe gebundene Hydroxyalkylgruppen wie oben beschrieben auf.

Solche Stoffzusammensetzungen in geeigneten Anwendungsformen enthalten im allgemeinen auch Wasser und einen geringen Anteil, verglichen mit dem Anteil Wasser, eines organischen Lösungsmittels, wie Äther, Alkohole, Ketone oder Ester, insbesondere 2-Butoxyäthanol oder n-Butanol.

Geeignete methylolierte Verbindungen für solche Stoffzusammensetzungen sind z.B. Harnstoff-Formaldehyd-Kondensate, Aminotriazin-Formaldehyd-Kondensate, besonders Melamin-Formaldehyd-und Benzoguanamin-Formaldehyd-Kondensate, und Phenol-Formaldehyd-Kondensate. Diese können gewünschtenfalls veräthert sein; so können z.B. die entsprechenden n-Butyläther verwendet werden. In vielen Fällen sind die methylolierten Verbindungen und deren Äther an sich nicht wasserlöslich oder in Wasser dispergierbar. Der Zusatz erfindungsgemässer Produkte begünstigt die Dispersion oder Lösung solcher Materialien in Wasser, wobei stabile Lösungen oder Dispersionen der Gemische erhalten werden.

Als Beispiele von geeigneten verkappten Polyisocyanaten (d.h. von Polyisocyanaten, die in wässriger Dispersion bei Raumtemperatur stabil sind, jedoch beim Erhitzen reagieren) seien erwähnt: Di- und Polyisocyanate, verkappt mit Carprolactam, einem Oxim (z.B. Cyclohexanonoxim), einem einwertigen Phenol (z.B. Phenol, p-Kresol und p-tert-Butylphenol) oder einem einwertigen aliphatischen, cycloaliphatischen oder araliphatischen Alkohol (z.B. Methanol, n-Butanol, Decanol, 1-Phenyläthanol, 2-Aethoxyäthanol und 2-n-Butoxyäthanol). Beispiele von geeigneten Isocyanaten sind aromatische Di-isocyanate, wie m-Phenylen-, 1,4-Naphthylen-, 2,4-und 2,6-Tolylen- und 4,4'-Methylen-bis-(phenylen)-di-isocyanate und deren Präpolymere mit Glykolen (z.B. Äthylenglykol und Propylenglykol), Glycerin, Trimethylolpropan, Pentaerythrit, Diäthylenglykol, sowie Addukte von Alkylenoxiden mit den genannten aliphatischen zwei- und mehrwertigen Alkoholen.

Die Stoffgemische können durch Erhitzen auf 100 bis 275°C, besonders 150 bis 225°C, während 30 Sekunden bis 1 Stunde, besonders 2 bis 30 Minuten, gehärtet werden.

Die Stoffgemische können auch andere wasserlösliche oder in Wasser dispergierbare filmbildende Substanzen enthalten, wie Alkydharze und Acrylharze. Der Anteil solcher Materialien kann innerhalb weiter Grenzen variieren, sollte aber nicht so gross sein, dass er die vorteilhaften Eigenschaften der erfindungsgemässen Stoffzusammensetzungen verdeckt. Im allgemeinen werden Zusätze von bis zu 50 Gew.-%, und vorzugsweise nicht mehr als 30 Gew.-%, verwendet, wobei sich diese Prozentsätze auf den Feststoffgehalt der Materialien beziehen.

Unter "Feststoffgehalt" wird in der Beschreibung und den Patentansprüchen der Restprozentsatz verstanden, der erhalten wird, nachdem 1 g Substanz in einer offenen Schale mit 5 cm Durchmesser bei Atmosphärendruck in einem Ofen während 3 Stunden auf 120°C erhitzt wurde.

Hydroxyalkylgruppen mit 1-4 C-Atomen, z.B. eine Methylolgruppe, enthaltende Reaktionsprodukte aus (A), (B) und (C) können ohne Zusatz von Aminoplasten, Phenol-Formaldehyd-Harzen oder verkappten Polyisocyanaten gehärtet werden.

Die vorliegende Erfindung betrifft demnach auch ein Verfahren zur Oberflächenbeschichtung, indem man auf die Oberfläche ein mit einer Hydroxyalkylgruppe mit 1-4 C-Atomen substituiertes Reaktionsprodukt aus (A), (B) und (C) appliziert und die beschichtete Oberfläche zum Härten während 30 Sekunden bis 1 Stunde, bevorzugt 2-30 Minuten, auf eine Temperatur zwischen 100 und 275°C, besonders 150 und 225°C, erhitzt.

Die mit den erfindungsgemässen Stoffgemischen zu beschichtenden Oberflächen bestehen vorzugsweise aus grundiertem oder nichtgrundiertem Metall, besonders Eisenmetallen. Es kann sich aber z.B. auch um Holz oder hitzebeständige synthetische Materialien handeln.

Die Stoffzusammensetzungen können durch Eintauchen, Bürsten, Walzen, Sprühen (einschliesslich elektrostatischer Sprühverfahren), durch Elektrotauchlackierung oder andere übliche Methoden appliziert werden. Gewünschtenfalls können sie auch Pigmente und Farbstoffe, oder andere Zusätze, wie z.B. Füllstoffe, wie Calciumcarbonat, Calciumsulfat, Bariumsulfat und Magnesiumsilikat; oberflächenaktive Mittel, Fliessmittel und Weichmacher, enthalten. Sie können ferner als Katalysatoren starke Säuren, wie z.B. aromatische Sulfonsäuren oder Salze davon mit Aminen oder Ammoniak, enthalten.

Die Erfindung wird durch die folgenden Beispiele näher erläutert. Darin sind Prozente stets Gewichtsprozente.

Die in den Beispielen verwendeten Ausgangsprodukte können wie folgt hergestellt werden:

Phenol I

359 g Epoxidharz I, ein flüssiger Diglycidylpolyäther von 2,2-Bis(4-hydroxyphenyl)propan; Epoxidgehalt 5,35 Äquivalente/kg, 246 g 2,2-Bis(4-hydroxyphenyl)propan, 20 g p-tert-Butylphenol und 0,39 g einer 10-%-igen wässrigen Natriumhydroxidlösung werden gerührt und unter Stickstoff auf 180°C erhitzt. Das Mol-Verhältnis von Epoxidharz: Bisphenol: einwertigem Phenol beträgt 1 : 1,14, : 0,14. Eine exotherme Reaktion setzt ein, und die Temperatur des Gemisches steigt spontan auf 207°C. Das Gemisch wird auf 180°C abgekühlt und 3,5 Stunden bei dieser Temperatur gerührt. Man erhält Phenol I, ein Harz mit endständigen phenolischen

Hydroxylgruppen, einem vernachlässigbaren Epoxidgruppengehalt und einem durchschnittlichen Molekulargewicht von 1880.

Phenol II

2500 g Epoxidharz I werden gerührt und unter Stickstoff auf 120°C erhitzt. Man gibt 75 g p-tert-Butylphenol und 897 g 2,2-Bis(4-hydroxyphenyl)propan zu, gefolgt von einer Lösung enthaltend 0,25 g Natriumhydroxid, 10,70 g Wasser und 3,50 g Methanol. Die Temperatur wird auf 160°C erhöht. Das Molverhältnis des Epoxidharzes : Bisphenol : einwertigem Phenol beträgt 1 : 0,57 : 0,07. Es setzt eine exotherme Reaktion ein und die Temperatur des Gemisches steigt spontan auf 210°C an. Das Gemisch wird auf 190°C abgekühlt und bei dieser Temperatur noch 2 Stunden gerührt. Danach beträgt der Epoxidgehalt 1,41 Äquivalente/kg. Man gibt 865 g 2,2-Bis(4-hydroxyphenyl)propan hinzu und rührt das Gemisch während weiteren 2 Stunden bei 190°C. Man erhält das Phenol II, ein Harz mit endständigen phenolischen Hydroxylgruppen, einem vernachlässigbaren Epoxidgruppengehalt (nicht mehr als 0,045 Äquiv./kg) und einem durchschnittlichen Molekulargewicht von 1945.

Phenol III

Phenol III wird analog wie Phenol II hergestellt, mit dem Unterschied, dass das Molverhältnis Epoxidharz; erstem zugefügtem Bisphenol : einwertigem Phenol : zweitem zugefügten Bisphenol 1 : 0,58 : 0,04 : 0,55 beträgt. Der Epoxidgehalt nach Zugabe des ersten Bisphenols beträgt 1,41 Äquiv./kg. Nach der Zugabe des zweiten Bisphenols wird das Gemisch gerührt und während 5 Stunden auf 195°C erhitzt. Man erhält Phenol III, ein Harz mit endständigen phenolischen Hydroxylgruppen, einem vernachlässigbaren Epoxidgehalt (nicht mehr als 0,05 Äquiv./kg) und einem durchschnittlichen Molekulargewicht von 2035.

Phenol IV

338 g Epoxidharz I, 225 g 2,2-Bis(4-hydroxyphenyl)propan und 0,5 g einer 5-%-igen wässrigen Natriumhydroxidlösung werden gerührt und unter Stickstoff auf 160°C erhitzt. Das Molverhältnis Epoxidharz : Bisphenol beträgt 1 : 1,2. Es setzt eine exotherme Reaktion ein und die Temperatur steigt auf 202°C an. Das Gemisch wird auf 180°C abgekühlt und bei dieser Temperatur 2 Stunden gerührt. Man gibt 2-Butoxyäthanol zu und lässt 3 Stunden bei 180°C weiterreagieren. Man erhält Phenol IV, ein Harz mit endständigen phenolischen Hydroxylgruppen, einem durchschnittlichen Molekulargewicht von 2900 und einem vernachlässigbaren Epoxidgehalt.

**Beispiel 1**

Eine Lösung von 50 g (0,027 Mol) Phenol I in 8,8 g 2-Butoxyäthanol und 10 g n-Butanol wird in einem mit Rührer, Kühler, Tropftrichter und Thermomether ausgestatteten Kolben auf 120°C erhitzt. Im Verlaufe von 2 Stunden wird die Lösung des Phenols I über den Tropftrichter mit der folgenden Monomer/Initiator-Mischung versetzt:

| | |
|---|---|
| Styrol | 6,6 g |
| Methylmethacrylat | 6,3 g |
| Benzoylperoxid (70-%-ig in Wasser) | 1,6 g |
| n-Butanol | 10,0 g |

Man lässt während 2 weiteren Stunden bei 120°C reagieren, versetzt mit einer weiteren Charge Benzoylperoxid (0,2 g) und lässt noch eine Stunde reagieren. Während einer Stunde wird ein zweites Monomer/Initiator-Gemisch aus

| | |
|---|---|
| Methylmethacrylat | 3,2 g |
| Benzoylperoxid (70-%-ig in Wasser) | 0,4 g und |
| n-Butanol | 5,0 g |

zugegeben. Man versetzt mit einer weiteren Charge Benzoylperoxid (0,2 g) und lässt noch 2 Stunden bei 120°C reagieren. Das Reaktionsgemisch wird auf 100°C abgekühlt und mit folgenden Komponenten versetzt:

| | |
|---|---|
| Asparaginsäure | 3,3 g |
| DMAMP-80 *) | 3,7 g |
| n-Butanol | 11,0 g |
| 2-Butoxyäthanol | 9,0 g |

*) 80 %ige wässrige Lösung von 2-(Dimethylamino)-2-methylpropan-1-ol.

Das Reaktionsgemisch wird eine halbe Stunde auf 100°C erhitzt und dann auf 90°C abgekühlt. Man gibt 2,5 g Paraformaldehyd (91 % Aktivgehalt, 0,076 Mol) zu und hält die Temperatur 6 Stunden bei 85°C. Danach beträgt der ermittelte Gehalt an freiem Formaldehyd 0,7 %. Das harzartige Produkt wird mit Wasser zu einer stabilen Emulsion mit einem Feststoffgehalt von 25 % verdünnt. Diese Emulsion ist mit Wasser vollständig verdünnbar.

**Beispiel 2**

Eine Lösung von 50 g (0,018 Mol) Phenol IV in 10 g 2-Butoxyäthanol und 10 g n-Butanol wird in einem mit Rührer, Kühler, Tropftrichter und Thermometer versehenen Kolben auf 120°C erhitzt. Zu der Lösung des Phenols IV wird im Verlaufe von 2 Stunden über den Tropftrichter das folgende Monomer/Initiator-Gemisch zugegeben:

| | |
|---|---|
| Styrol | 6,6 g |
| Methylmethacrylat | 6,3 g |
| Benzoylperoxid (70-%-ig in Wasser) | 1,6 g |
| n-Butanol | 10,0 g. |

Man lässt 2 weitere Stunden bei 120°C reagieren, versetzt dann mit einer weiteren Charge Benzoylperoxid (0,2 g) und lässt noch einmal eine Stunde reagieren. Im Verlaufe einer Stunde wird ein zweites Monomer/Initiator-Gemisch aus

| | |
|---|---|
| Methylmethacrylat | 3,2 g |
| Benzoylperoxid(70-%-ig in Wasser) | 0,4 g und |
| n-Butanol | 5,0 g |

zugegeben. Man versetzt mit einer weiteren Charge Benzoylperoxid (0,2 g) und lässt noch 2 Stunden bei 120°C reagieren. Das Reaktionsgemisch wird auf 100°C abgekühlt und mit folgenden Komponenten versetzt:

| | |
|---|---|
| Asparaginsäure | 3,3 g |
| DMAMP-80 | 3,7 g |
| n-Butanol | 8,7 g |
| 2-Butoxyäthanol | 6,9 g |

Das Reaktionsgemisch wird eine halbe Stunde auf 100°C erhitzt und dann auf 91°C abgekühlt. Man gibt 2,5 g Paraformaldehyd (91% Aktivgehalt, 0,076 Mol) zu und hält die Temperatur während 6 Stunden bei 85°C. Danach beträgt der ermittelte Gehalt an freiem Formaldehyd 0,8 %. Mittels Gaschromatographie kann kein freies Styrol festgestellt werden. Nach Zugabe von weiteren 1,8 g DMAMP-80 wird das Reaktionsprodukt mit Wasser zu einer stabilen Emulsion mit einem Feststoffgehalt von etwa 25 % verdünnt. Diese Emulsion ist mit Wasser vollständig verdünnbar.

**Beispiel 3**

Eine Lösung von 50 g (0,027 Mol) Phenol I in 10 g 2-Butoxyäthanol und 10 g n-Butanol wird in einem mit Rührer, Kühler, Tropftrichter und Thermometer versehenen Kolben auf 120°C erhitzt. Die Lösung des Phenole I wird im Verlauf von 2 Stunden über den Tropftrichter mit dem folgenden Monomer/Initiator-Gemisch

| | |
|---|---|
| Styrol | 6,6 g |
| Methylmethacrylat | 6,3 g |
| n-Butanol | 10,0 g |
| Azobis(isobutyronitril) | 1,12 g |

versetzt. Man lässt 2 weitere Stunden bei 120°C reagieren, versetzt mit einer weiteren Charge Azobis(isobutyronitril) (0,2 g) und lässt noch eine Stunde reagieren. Im Verlaufe einer Stunde wird ein zweites Monomer/Initiator-Gemisch aus

| | |
|---|---|
| Methylmethacrylat | 3,2 g |
| n-Butanol | 5,0 g und |
| Azobis(isobutyronitril) | 0,28 g |

hinzugegeben. Man fügt eine weitere Charge Azobis(isobutyronitril) (0,2 g) hinzu und lässt noch 2 Stunden bei 120°C reagieren. Das Reaktionsgemisch wird auf 100°C gekühlt und mit den folgenden Komponenten versetzt:

| | |
|---|---|
| Asparaginsäure | 3,3 g |
| DMAMP-80 | 3,7 g |
| n-Butanol | 8,6 g |
| 2-Butoxyäthanol | 6,8 g |

Das Gemisch wird eine halbe Stunde auf 100°C erhitzt und dann auf 90°C abgekühlt. Man gibt 2,5 g Paraformaldehyd (91 % Aktivgehalt, 0,076 Mol) hinzu und hält die Temperatur während 6 Stundenbei 85°C. Danach ist der gemessene Gehalt an freiem Formaldehyd 0,3 %. Das harzartige Produkt wird mit Wasser zu einer stabilen Emulsion mit einem Feststoffgehalt von etwa 25 % verdünnt. Diese Emulsion ist mit Wasser vollständig verdünnbar.

**Beispiel 4**

Eine Lösung von 50 g (0,027 Mol) Phenol I in 10 g 2-Butoxyäthanol und 10 g n-Butanol wird in einem mit Rührer, Kühler, Tropftrichter und Thermometer versehenen Kolben auf 120°C erhitzt. Die Lösung des Phenols I wird im Verlauf von 2 Stunden über den Tropftrichter mit dem folgenden Monomer/Initiator-Gemisch versetzt:

| | |
|---|---|
| Styrol | 6,6 g |
| Methylmethacrylat | 6,3 g |
| n-Butanol | 10,0 g |
| Cumolhydroperoxid (80-%ig- in Cumol) | 1,12 g |

Man lässt weitere 2 Stunden bei 120°C reagieren, versetzt mit einer weiteren Charge Cumolhydroperoxid (0,2 g) und lässt noch eine Stunde reagieren. Im Verlaufe einer Stunde wird ein zweites Monomer/Initiator-Gemisch aus

| | |
|---|---|
| Methylmethacrylat | 3,2 g |
| Cumolhydroperoxid (80-%-ig in Cumol) | 0,28 g und |
| n-Butanol | 5,0 g |

zugegeben. Man versetzt mit einer weiteren Charge Cumolhydroperoxid (0,2 g) und lässt noch 2 Stunden bei 120°C reagieren. Das Reaktionsgemisch wird auf 100°C abgekühlt und mit folgenden Komponenten versetzt:

| | |
|---|---|
| Asparaginsäure | 3,3 g |
| DMAMP-80 | 3,7 g |
| n-Butanol | 8,6 g |
| 2-Butoxyäthanol | 6,8 g |

Das Reaktionsgemisch wird eine halbe Stunde auf 100°C erhitzt und dann auf 90°C abgekühlt. Man gibt 2,5 g Paraformaldehyd (91 % Aktivgehalt, 0,076 Mol) hinzu und hält die Temperatur während 6 Stunden bei 85°C. Danach beträgt dar gemessene Gehalt an freiem Formaldehyd 0,45 %. Das harzartige Produkt wird mit Wasser zu einer stabilen Emulsion mit einem Feststoffgehalt von 25 % verdünnt. Diese Emulsion ist mit Wasser vollständig verdünnbar.

**Beispiel 5**

Eine Lösung von 500 g (0,025 Mol) Phenol III in 100 g 2-Butoxyäthanol und 100 g n-Butanol wird in einem mit Rührer, Kühler, Tropftrichter und Thermometer versehenen Kolben auf 120°C erhitzt. Die Lösung des Phenols III wird im Verlauf von 2 Stunden über den Tropftrichter mit dem folgenden Monomer/Initiator-Gemisch versetzt:

| | |
|---|---|
| Styrol | 66,0 g |
| Methylmethacrylat | 63,0 g |
| Cumolhydroperoxid (80-%-ig in Cumol) | 11,0 g |
| n-Butanol | 100,0 g |

Man lässt 2 Stunden bei 120°C reagieren, versetzt mit einer weiteren Charge Cumolhydroperoxid (2,0 g) und lässt noch eine Stunde reagieren. Im Verlaufe einer Stunde wird ein zweites Monomer/Initiator-Gemisch aus

| | |
|---|---|
| Methylmethacrylat | 32,0 g |
| Cumolhydroperoxid (80-%-ig in Cumol) | 2,8 g und |
| n-Butanol | 50,0 g |

zugegeben. Man gibt eine weiteren Charge Cumolhydroperoxid (2,0 g) hinzu und lässt weitere 2 Stunden bei 120° C reagieren. Das Reaktionsgemisch wird auf 100° C abgekühlt und mit folgenden Komponenten versetzt:

| | |
|---|---|
| Asparaginsäure | 33 g |
| DMAMP-80 | 37 g |
| n-Butanol | 86 g |
| 2-Butoxyäthanol | 68 g |

Das Reaktionsgemisch wird 30 Minuten auf 100°C erhitzt und dann auf 90°C abgekühlt. Man gibt 25 g Paraformaldehyd (91 % Aktivgehalt, 0,76 Mol) zu und hält die Temperatur während 6 Stunden bei 85° C. Danach beträgt der gemessene Gehalt an freiem Formaldehyd 0,45 %. Das harzartige Produkt wird mit Wasser zu einer stabilen Emulsion mit einem Feststoffgehalt von 25 % verdünnt. Diese Emulsion ißt mit Wasser vollständig verdünnbar.

**Beispiel 6**

Eine Lösung von 50 g (0,027 Mol) Phenol I in 10 g 2-Butoxyäthanol und 10 g n-Butanol wird in einem mit Rührer, Kühler, Tropftrichter und Thermometer versehenen Kolben auf 120°C erhitzt. Die Lösung des Phenols I wird im Verlauf von 2 Stunden über den Tropftrichter mit dem folgenden Monomer/Initiator-Gemisch versetzt:

| | |
|---|---|
| Styrol | 15,0 g |
| Cumolhydroperoxid (80-%-ig in Cumol) | 1,5 g |
| n-Butanol | 10,0 g |

Man lässt weitere 2 Stunden bei 120° C reagieren, versetzt mit einer weiteren Charge Cumolhydroperoxid (0,2 g) und lässt noch 2 Stunden reagieren. Im Verlaufe einer Stunde wird eine zweite Monomer/Initiator-Mischung aus

| | |
|---|---|
| Methylmethacrylat | 3,0 g |
| Cumolhydroperoxid (80-%-ig in Cumol) | 0,3 g und |
| n-Butanol | 5,0 g |

zugegeben. Man fügt eine weitere Charge Cumolhydroperoxid (0,2 g) hinzu und lässt noch 2 Stunden bei 120° C reagieren. Das Reaktionsgemisch wird auf 100° C abgekühlt und mit folgenden Komponenten versetzt:

| | |
|---|---|
| Asparaginsäure | 3,3 g |
| DMAMP-80 | 3,7 g |
| n-Butanol | 9,8 g |
| 2-Butoxyäthanol | 7,4 g |

Das Reaktionsgemisch wird eine halbe Stunde auf 100° C erhitzt und dann auf 90° C abgekühlt. Man gibt 2,5 g Paraformaldehyd (91 % Aktivgehalt, 0,076 Mol) hinzu und hält die Temperatur während 6 Stunden bei 85° C. Das harzartige Produkt wird mit Wasser zu einer stabilen Emulsion mit einem Feststoffgehalt von 25 % verdünnt. Diese Emulsion ist mit wasser vollständig verdünnbar.

**Beispiel 7**

Eine Lösung von 320 g (0,13 Mol) Phenol III in 155,4 g 2-Butoxyäthanol und 155,4 g n-Butanol wird in einem mit Rührer, Kühler, Stickstoffeinleitung, Temperaturmessung und peristaltischer Zufuhrpumpe versehenen Kolben auf 110° C erhitzt. Man gibt 0,55 Benzoylperoxid (70-%-ig in Wasser) zu und beginnt mit der Styrolzufuhr bei 0,8 $ml.min^{-1}$. Insgesamt werden im Verlaufe von 90 Minuten 80 g Styrol eingeleitet. Es wird weiteres Benzoylperoxid zugegeben und zwar 1,55 g nach 30 Minuten, 1,55 g nach 60 Minuten und 3,1 g nach 90 Minuten. Das Gemisch wird noch 2 Stunden auf 110° C erhitzt. Man gibt 21,2 g (0,16 Mol) Asparaginsäure und 23,6 g 2-(Dimethylamino)-2-methylpropan-1-ol (80-%-ige wässrige Lösung, 0,16 Mol) zu, rührt das Gemisch während 15 Minuten und kühlt dann auf 80° C ab. Man gibt 14,2 g Paraformaldehyd (91 % Aktivgehalt, 0,35 Mol) zu und hält die Temperatur 3 Stunden bei 80° C. Das harzartige Produkt hat einen Feststoffgehalt von 56 % und ist mit Wasser vollständig verdünnbar.

**Beispiel 8**

Beispiel 7 wird wiederholt unter Verwendung einer Lösung von 320 g (0,17 Mol) Phenol I anstelle des Phenols III. Das erhaltene Produkt hat einen Feststoffgehalt von 56 % und ist mit Wasser vollständig verdünnbar.

**Beispiel 9**

499,1 g eines Epoxidharzes mit einem Epoxidgehalt von 1,52 Aequiv./kg, hergestellt durch Vorverlängerung des Epoxidharzes I mit 2,2-Bis(4-hydroxyphenyl)propan, werden auf 145° C erhitzt und im Verlaufe von 1 Stunde über eine peristaltische Pumpe mit einem Gemisch aus 99,8 g Styrol und 5,5 g Cumolhydroperoxid (80-%-ig in Cumol) versetzt. Man lässt weitere 2 Stunden bei 145° C reagieren. Nach Zugabe von 124,5 g (0,55 Mol) 2,2-Bis(4-hydroxyphenyl)propan wird die Temperatur des Reaktionsgemisches innerhalb von 5 Stunden langsam auf 190° C erhöht. Nach dieser Zeit ist der Epoxidgehalt vernachlässigbar. Man gibt 285,2 g 2-Butoxyäthanol und 285,2 g n-Butanol zu und kühlt die entstandene Lösung auf 110° C ab. Man versetzt mit 36,4 g (0,27 Mol) Asparaginsäure und 40,5 g 2-(Dimethylamino)-2-methylpropan-1-ol (80-%-ige wässrige Lösung, 0,28 Mol) und kühlt das Reaktionsgemisch auf 80° C ab. Man gibt 24,3 g Paraformaldehyd (91 % Aktivgehalt, 0,74 Mol) zu und hält die Temperatur des Gemisches während 3 Stunden bei 80° C. Die erhaltene Lösung des harzartigen Produktes hat einen Feststoffgehalt von 56 % und ist mit Wasser vollständig verdünnbar.

**Beispiel 10**

722 g (0,37 Mol) Phenol II werden in 350,6 g 2-Butoxyäthanol und 350,6 g n-Butanol bei 120° C gelöst. Über eine peristaltische Pumpe wird innerhalb von 150 Minuten eine Lösung aus 7,6 g Cumolhydroperoxid (80-%-ige Lösung in Cumol) und 144,5 g Styrol eingeleitet. Das Gemisch wird 3 Stunden bei 120° C gehalten. Anschliessend wird die Lösung auf 100° C abgekühlt und mit 47,8 g (0,36 Mol) Asparaginsäure und 53,2 g 2-(Dimethylamino)-2-methyl-propan-1-ol (80-%-ige wässrige Lösung, 0,36 Mol) versetzt. Nach dem Abkühlen auf 80° C gibt man 32,0 g Paraformaldehyd (91 % Aktivgehalt, 0,97 Mol) zu und rührt das Gemisch 3 Stunden bei 80° C. Das erhaltene harzartige Produkt hat einen Feststoffgehalt von 58 % und ist mit Wasser vollständig verdünnbar. Eine Mischung dieses Produkte mit einem im Handel erhältlichen butylierten Harnstoff-Formaldehyd-Harz mit einem Feststoffgehalt von 53 %, in einem Feststoffgehalt-Verhältnis von 90 : 10, ergibt nach dem Verdünnen mit Wasser eine Emulsion mit einem Feststoffgehalt von 25 %. Diese Emulsion eignet sich als Beschichtungsmaterial und hat eine Viskosität (Ford B4-Becher) von 18 Sekunden.

**Beispiel 11**

Eine Lösung von 50 g (0,027 Mol) Phenol I in 10 g 2-Butoxyäthanol und 10 g n-Butanol wird auf 120° C erhitzt. Die Lösung wird im Verlauf von 2 Stunden tropfenweise mit dem folgenden Monomer/Initiator-Gemisch versetzt:

| | |
|---|---|
| Styrol | 10,0 g |
| Methylmethacrylat | 2,5 g |
| Cumolhydroperoxid (80-%-ige Lösung in Cumol) | 1,25 g |
| n-Butanol | 10,0 g |

Man lässt eine weitere Stunde bei 120° C reagieren, fügt weiteres Cumolhydroperoxid (0,2 g) zu und lässt noch 2 Stunden bei 120° C reagieren. Dann versetzt man tropfenweise innerhalb einer Stunde mit einem zweiten Monomer/Initiator-Gemisch aus:

| | |
|---|---|
| Methylmethacrylat | 3,0 g |
| Cumolhydroperoxid (80-%-ige Lösung in Cumol) | 0,3 gund |
| n-Butanol | 5,0 g |

Man gibt eine weitere Charge Cumolhydroperoxid (0,2 g) zu und lässt noch 2 Stunden bei 120° C reagieren. Das Reaktionsgemisch wird auf 100° C abgekühlt und mit folgenden Komponenten versetzt:

| | |
|---|---|
| Asparaginsäure | 3,3 g |
| DMAMP-80 | 3,7 g |
| n-Butanol | 8,6 g |
| 2-Butoxyäthanol | 6,8 g |

Das Gemisch wird 30 Minuten auf 100°C gehalten und dann auf 90°C abgekühlt. Man gibt 2,5 g Paraformaldehyd (91 % Aktivgehalt, 0,076 Mol) zu und hält die Temperatur während 6 Stunden bei 85°C. Danach beträgt der gemessene Gehalt an freiem Formaldehyd 0,6 %. Die erhaltene Lösung des harzartigen Produktes ist mit Wasser vollständig verdünnbar. Ein Gemisch dieses Produkts mit einem im Handel erhältlichen butylierten Harnstoff-Formaldehyd-Harz mit einem Feststoffgehalt von 53 %, in einem Feststoffgehalt-Verhältnis von 90 : 10, ergibt nach dem Verdünnen mit Wasser eine Emulsion mit einem Feststoffgehalt von 25 %. Diese Emulsion kann als Beschichtungs mittel verwendet werden und hat eine Viskosität (Ford B4-Becher) von 26 Sekunden.

**Beispiel 12**

Eine Lösung von 50 g (0,027 Mol) Phenol I in 20 g 2-Butoxyäthanol wird auf 120°C erhitzt. Die Lösung wird im Verlauf von 2 Stunden tropfenweise mit dem folgenden Monomer/Initiator-Gemisch versetzt:

| | |
|---|---|
| Styrol | 6,3 g |
| Methylmethacrylat | 3,1 g |
| Cumolhydroperoxid (80-%-ige Lösung in Cumol) | 0,9 g |
| 2-Butoxyäthanol | 10,0 g |

Man lässt eine weitere Stunde bei 120°C reagieren, fügt weiteres Cumolhydroperoxid (0,2 g) zu und lässt noch 2 Stunden bei 120°C reagieren. Im Verlaufe einer Stunde tropft man ein zweites Monomer/Initiator-Gemisch aus

| | | |
|---|---|---|
| Methylmethacrylat | 3,1 g | |
| Cumolhydroperoxid (80 %ige Lösung in Cumol) | 0,3 g | und |
| 2-Butoxyäthanol | 5,0 g | |

zu. Man gibt eine weitere Charge Cumolhydroperoxid (0,2 g) zu und lässt noch 2 Stunden bei 120°C reagieren. Das Reaktionsgemisch wird auf 100°C abgekühlt und mit folgenden Komponenten versetzt:

| | |
|---|---|
| Thioglykolsäure | 11,5 g |
| 2-(Dimethylamino)äthanol | 11,1 g |
| 2-Butoxyäthanol | 10,0 g |

Das Gemisch wird 30 Minuten bei 100°C gehalten und dann auf 90°C abgekühlt. Man gibt 5,5 g Paraformaldehyd (91 % Aktivgehalt, 0,168 Mol) zu und erhöht die Temperatur zum Rückfluss (137°C). Das Gemisch wird 6,5 Stunden bei Rückfluss gehalten. Danach ist der ermittelte Gehalt an freiem Formaldehyd 0,35 %. Die erhaltene Lösung des harzartigen Produktes ist mit Wasser vollständig verdünnbar.

**Beispiel 13**

Es wird ein Beschichtungsmittel hergestellt, indem man das Produkt gemäss Beispiel 5 in einem Feststoffgehalt-Verhältnis von 70 : 30 mit einem im Handel erhältlichen butylierten Phenol-Formaldehydharz in Form einer 56-%-igen Lösung in n-Butanol, die noch geringe Mengen Toluol enthält, vermischt. Die Zusammensetzung wird durch Schleuderbeschichtung auf eine verzinnte Stahlplatte so appliziert, dass eine Schichtdicke von 2-4 µm entsteht. Die Platten werden zum Härten der Beschichtung 10 Minuten auf 200°C erhitzt. Die gehärtete Beschichtung zeigt nach dem Eintauchen in 2-%-ige kochende Essigsäure während 6 Stunden keine Defekte.

**Beispiel 14**

Es wird ein Beschichtungsmittel hergestellt, indem man das Produkt gemäss Beispiel 7 in einem Feststoffgehalt-Verhältnis von 90 : 10 mit einem im Handel erhältlichen butylierten Harnstoff-Formaldehydharz mit einem Feststoffgehalt von 53 % vermischt und das Gemisch mit Wasser zu einer Emulsion mit einem

Feststoffgehalt von 25 % verdünnt. Es wird die Viskosität der Emulsion bestimmt. Die Emulsion wird derart auf elektrolytisches Weissblech appliziert, dass eine Filmdicke von 2-4 um resultiert. Die Härtung erfolgt durch Erhitzen auf 215°C während 3 Minuten. Anschliessend wird das beschichtete Weissblech geprüft. Die Ergebnisse der Viskositätsmessungen und der restlichen Prüfungen der gehärteten Beschichtungen sind unten zusammengefasst;

| | |
|---|---|
| Viskosität der Emulsion (Ford B4-Becher) | über 100 Sekunden |
| Reibtest mit Methyläthylketon[1)] | 22 |
| Keilbiegetest[2)] unverändert zu | 82 % |
| Haftung (Kreuzschraffierung)[3)] unverändert zu | 100 % |

| Pasteurisation[4)] | Haftung | Ausbluten |
|---|---|---|
| in Wasser bei 100° C/l Std. | 0 | 0 |
| in Dampf bei 120° C/l Std. | 0 | 0 |
| in kochender 5-%-iger Zitronensäure/l Std. | 0 | 0 |
| in kochender 5-%-iger Essigsäure/l Std. | 5 | 0 |
| in kochender 5-%-iger Phosphorsäure/l Std. | 0 | 0 |

1) Reibtest mit Methyläthylketon: Dabei wird die beschichtete Oberfläche Doppelreibungen mit mit Methyläthylketon getränkter Watte unterzogen. Das Resultat stellt die Anzahl, der Doppelreibungen dar, bevor an der Beschichtung erste Zeichen einer Beschädigung festgestellt werden.

2) Keilbiegetest Dabei wird die Schlagbiegung der Prüfling über einen 10 cm langen Biegedorn mit einem Aussendurchmesser von 6 mm an dem einen Ende und dem spitz auslaufenden anderen Ende ermittelt. Anschliessend wird die Länge des Prüflings in Prozent bestimmt, auf der sich die Beschichtung nicht ablöst.

3) Haftung (Kreuzschraffierung); Dabei werden auf den gehärteten Beschichtungen mit einer Messerkante in Abständen von 3 mm in der einen Richtung parallele Linien und in einem Winkel von 90° dazu kreuzende parallele Linien, ebenfalls in Abständen von 3 mm, eingeritzt. Anschliessend wird ein Klebeband fest auf die kreuzweise geritzte Oberfläche gepresst. Das Klebeband wird mit einer schnellen kontinuierlichen Bewegung abgerissen, und danach wird die geprüfte Oberfläche auf das Ablösen der Beschichtung untersucht. Es wird die Oberfläche in % bestimmt, auf der die Beschichtung nicht abgelöst wird.

4) Pasteurisation: Dabei werden die Proben während der angegebenen Zeiten in Wasser, Dampf oder den angegebenen Säuren erhitzt. Anschliessend werden die Oberflächen auf Ausbluten untersucht, und der Haftungstest (Kreuzschraffierung) wird wiederholt. Die Haftfestigkeit und die Festigkeit gegen das Ausbluten werden mit einer von 0-5 reichenden Skala bewertet; 0 bedeutet ausgezeichnete Haftung und kein Ausbluten; 5 bedeutet schlechte Werte bezüglich Haftung und Ausbluten.

**Patentansprüche**

1. Verfahren zur Herstellung von mit Wasser verdünnbaren harzartigen Produkten, dadurch gekennzeichnet, dass man
(A) ein Harz mit mindestens einer phenolischen Hydroxylgruppe und einer freien Stellung in ortho- und/oder para-Stellung zur phenolischen Hydroxylgruppe, das einen durch Polymerisation eines Vinylmonomers im Harz oder einem Vorläufer davon gebildeten Rest enthält,
(B) einen Aldehyd und
(C) Schwefelsäure oder eine organische Säure mit einer primären oder sekundären Aminogruppe oder einer Mercaptangruppe und einer Carbonsäure-, Sulfonsäure- oder Phosphonsäuregruppe, oder ein wasserlösliches Salz davon miteinander umsetzt.

2. Verfahren nach Anspruch 1, worin (A) ein Harz ist, das durch Umsetzung eines Epoxidharzes mit einem mehrvertigen Phenol mit einer freien Stellung in ortho- und/oder para-Stellung zur phenolischen Hydroxylgruppe zu einem Harz mit endständigen Phenolgruppen und Polymerisation eines Vinylmonomers in dem Harz mit endständigen Phenolgruppen erhalten wird.

3. Verfahren nach Anspruch 1 oder 2, worin (A) ein Harz ist, das durch Polymerisation eines Vinylmonomers in einem Epoxidharz mit einer sekundären alkoholischen Hydroxylgruppe und Umsetzung des erhaltenen Produkte mit einem mehrwertigen Phenol mit einer freien Stellung in ortho- und/oder para-Stellung zu einer phenolischen Hydroxylgruppe zu einem Harz mit endständigen Phenolgruppen erhalten wird.

4. Verfahren nach Anspruch 2 oder 3, worin das mehrwertige Phenol ein Bisphenol der Formel I

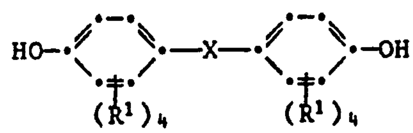 (I)

ist, worin

die $R^1$ unabhängig voneinander ein Wasserstoffatom, ein Halogenatom, eine Alkylgruppe mit 1-4 C-Atomen oder eine Alkenylgruppe mit 2-4 C-Atomen darstellen, mit der Massgabe, dass mindestens eine der Gruppen $R^1$ in ortho-Stellung zu einer phenolischen Hydroxylgruppe ein Wasserstoffatom ist, und X eine Alkylen- oder Alkylidengruppe mit 1-3 C-Atomen, eine Carbonyl- oder Sulfonylgruppe, ein Sauerstoff- oder Schwefelatom oder eine kovalente Bindung bedeutet.

5. Verfahren nach einem der Ansprüche 2-4, worin das Vinylmonomer, zusammen mit einem freie Radikale bildenden Polymerisationsinitiator, mit dem Harz mit endständigen Phenolgruppen, dem Epoxidharz-Vorläufer oder einer Lösung davon in einem organischen Lösungsmittel vermischt und das Gemisch auf 60-200°C erhitzt wird.

6. Verfahren nach einem der Ansprüche 1-5, worin das Vinylmonomer in einer solchen Menge eingesetzt wird, dass es bis zu 50 Gewichtsprozent des Harzes (A) ausmacht.

7. Verfahren nach einem der Ansprüche 1-6, worin das Vinylmonomer ein Styrol, Acrylsäure, Methacrylsäure oder ein Ester davon, Acrylamid, Methacrylamid oder ein Hydroxyalkylderivat davon, ein Vinylester einer Carbonsäure oder ein Gemisch aus zwei oder mehr dieser Verbindungen ist.

8. Verfahren nach einem der Ansprüche 5-7, worin der Polymerisationsinitiator ein Peroxid oder eine Azoverbindung ist und in einer Menge von 1-20 Gewichtsprozent, bezogen auf das Monomer, vorliegt.

9. Verfahren nach einem der Ansprüche 1-8, worin der Aldehyd (B) ein aliphatischer Aldehyd mit 1-6 C-Atomen ist.

10. Verfahren nach einem der Ansprüche 1-8, worin (C) eine Mercaptocarbonsäure der Formel IV

$HS\text{-}R^7\text{-}COOH$ (IV),

worin $R^7$ eine aliphatische, aromatische oder araliphatische zweiwertige Gruppe mit bis zu 10 C-Atomen, die eine weitere Carbonsäuregruppe enthalten kann, bedeutet, oder eine Aminocarbonsäure der Formel V

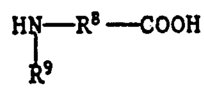 (V)

ißt, worin

$R^8$ eine aliphatische, aromatische oder araliphatische zweiwertige
Gruppe mit bis zu 10 C-Atomen, die eine weitere Carbonsäuregruppe enthalten kann,
$R^9$ ein Wasserstoffatom, eine Gruppe der Formel VI

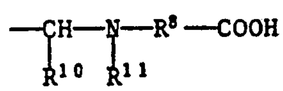 (VI)

oder eine Alkylgruppe mit 1-6 C-Atomen, die durch eine weitere Carbonsäuregruppe oder eine Gruppe der Formeln $-CH(R^{10})OH$ oder $-CH(R^{10})OR)^{12}$ substituiert sein kann, mit der Massgabe, dass $R^8$ und $R^9$ zusammen nicht mehr als eine Carbonsäuregruppe enthalten, $R^{10}$ ein Wasserstoffatom, eine Alkylgruppe mit 1-4 C-Atomen oder eine Arylgruppe mit 6-10 C-Atomen,

$R^{11}$ ein Wasserstoffatom, eine Carboxylgruppe oder eine Alkylgruppe mit 1-6 C-Atomen, die durch eine Carboxylgruppe oder eine Gruppe der Formeln $-CH(R^{10})OH$ oder $-CH(R^{12})OR$ substituiert sein kann, und $R^{12}$ eine Alkylgruppe mit 1-6 C-Atomen oder eine Alkoxyalkylgruppe, in der die Alkoxy- und Alkylgruppen je 1-6 C-Atome aufweisen, darstellen.

11. Verfahren nach Anspruch 10, worin (C) Glyzin, Glutaminsäure, Asparaginsäure, p-Aminobenzoesäure, Sarkosin oder Thioglykolsäure ist.

12. Verfahren nach einem der vorangehenden Ansprüche, worin (A), (B) und (C) zusammen in einem inerten Lösungsmittel in Gegenwart einer Base in einer für eine mindestens teilweise Neutralisierung allfällig vorhandener freier Säure ausreichenden Menge auf Temperaturen zwischen 60 und 180°C erhitzt werden.

13. Verfahren nach einem der vorangehenden Ansprüche, worin 0,3 bis 2,0 Mol Komponente (C) pro Mol phenolische Hydroxylgruppen in (A) und 1,1 bis 4,0 Mol Komponente (B) pro Mol (C) verwendet werden.

14. Heisshärtbare Stoffzusammensetzung enthaltend 100 Gewichtsteile eines nach dem Verfahren gemäss

einem der vorangehenend Ansprüche 1-13 erhaltenen Produkts, bezogen auf den Feststoffgehalt (wie im Vorangehenden definiert) und 2-200 Gewichtsteile, bezogen auf den Feststoffgehalt, eines Aminoplasts, Phenol-Formaldehyd-Harzes oder eines verkappten Polyisocyanats, wobei der Aminoplast oder das Phenol-Formaldehyd-Harz mindestens zwei Gruppen der Formel VII

$-CH_2OR^{13}$ (VII)

aufweist, die direkt an Amidstickstoffatome oder an Kohlenstoffatome eines phenolischen Ringes gebunden sind, und worin $R^{13}$ ein Wasserstoffatom oder eine Alkylgruppe mit 1-6 C-Atomen darstellt.

**Claims**

1. A process for the preparation of water-dilutable resinous products which comprises reacting together
(A) a resin having at least one phenolic hydroxyl group and a free position ortho and/or para to the phenolic hydroxyl group, and containing a residue formed by polymerisation of a vinyl monomer in the resin or in a precursor thereof.
(B) an aldehyde, and
(C) sulphuric acid or an organic acid containing a primary or secondary amino group or a mercaptan group and a carboxylic, sulphonic or phosphonic acid group, or a water-soluble salt thereof.

2. A process according to Claim 1, in which (A) is a resin obtained by reacting an epoxide resin with a polyhydric phenol having a free position ortho and/or para to the phenolic hydroxyl group to produce a phenol-terminated resin and polymerising a vinyl monomer in the phenolterminated resin.

3. A process according to Claim 1 or 2, in which (A) is a resin obtained by polymerising a vinyl monomer in an epoxide resin having a secondary alcoholic hydroxyl group and reacting the resulting product with a polyhydric phenol having a free position ortho and/or para to a phenolic hydroxyl group to give a phenol-terminated resin.

4. A process according to Claim 2 or 3, in which the polyhydric phenol is a bisphenol of formula I

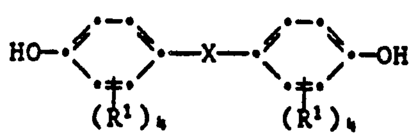

(I),

where
each $R^1$ independently is a hydrogen atom, a halogen atom, an alkyl group of 1 to 4 carbon atoms, or an alkenyl group of 2 to 4 carbon atoms, with the proviso that at least one of the groups $R^1$ ortho to a phenolic hydroxyl group is a hydrogen atom, and X is an alkylene or alkylidene group of 1 to 3 carbon atoms, a carbonyl or sulphonyl group, an oxygen or sulphur atom, or a covalent bond.

5. A process according to any one of Claims 2 to 4, in which the vinyl monomer, together with a free radical polymerisation initiator, is mixed with the phenol-terminated resin, the epoxide resin precursor, or a solution thereof in an organic solvent, and the mixture is heated at 60 to 200°C.

6. A process according to any one of Claims 1 to 5, in which the vinyl monomer is used in an amount to provide up to 50 % by weight of the resin (A).

7. A process according to any one of Claims 1 to 6, in which the vinyl monomer is a styrene; acrylic or methacrylic acid or an ester thereof; acrylamide, methacrylamide or a hydroxyalkyl derivative thereof; or a vinyl ester of a carboxylic acid, or a mixture of two or more of these compounds.

8. A process according to any one of Claims 5 to 7, in which the polymerisation initiator is a peroxide or an azo compound and is present in an amount of 1 to 20 % by weight, calculated on the monomer.

9. A process according to any one of Claims 1 to 8, in which the aldehyde (B) is an aliphatic aldehyde having 1 to 6 carbon atoms.

10. A process according to any one of Claims 1 to 8, in which (C) is a mercaptocarboxylic acid of formula IV

$HS-R^7-COOH$ (IV),

where $R^7$ is an aliphatic, aromatic or araliphatic divalent group of up to 10 carbon atoms which may contain a further carboxylic acid group, or is an aminocarboxylic acid of formula V

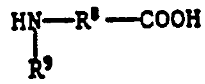 (V),

where

$R^8$ is an aliphatic, aromatic or araliphatic divalent group of up to 10 carbon atoms which may contain a further carboxylic acid group,

$R^9$ is a hydrogen atom, a group of formula VI

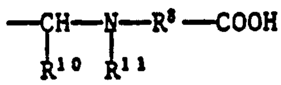 (VI)

or an alkyl group of 1 to 6 carbon atoms which may be substituted by a further carboxylic acid group or by a group of formula -CH($R^{10}$)OH or -CD($R^{10}$)O$R^{12}$, with the proviso that $R^8$ and $R^9$ together contain not more than one carboxylic acid group,

$R^{10}$ is a hydrogen atom, an alkyl group of 1 to 4 carbon atoms, or an aryl group of 6 to 10 carbon atoms,

$R^{11}$ is a hydrogen atom, a carboxyl group, or an alkyl group of 1 to 6 carbon atoms which may be substituted by a carboxyl group or by a group of formula -CH($R^{10}$)OH or CH($R^{12}$)OR, and

$R^{12}$ is an alkyl group of 1 to 6 carbon atoms or an alkoxyalkyl group in which the alkoxy group and alkyl group each have from 1 to 6 carbon atoms.

11. A process according to Claim 10 in which (C) is glycine, glutamic acid, aspartic acid, p-aminobenzoic acid, sarcosine or thioglycolic acid.

12. A process according to any one of the preceding Claims, in which (A), (B) and (C) are heated together in an inert solvent, in the presence of sufficient base at least partially to neutralise any free acid, at a temperature of 60 to 180° C.

13. A process according to any one of the preceding Claims, in which there are used 0.3 to 2.0 moles of component (C) per mole of phenolic hydroxyl groups in (A) and 1.1 to 4.0 moles of component (B) per mole of (C).

14. A heat-curable composition comprising 100 parts by weight of a product prepared by a process according to any one of the preceding Claims 1 to 13, calculated on its solids content (as defined above) and 2 to 200 parts by weight, calculated on its solids content, of an aminoplast, a phenol-formaldehyde resin, or a blocked polyisocyanate, the aminoplast or phenol-formaldehyde resin having at least 2 groups of formula VII

$-CH_2OR^{13}$ (VII)

attached directly to amidic nitrogen atoms or directly attached to carbon atoms of a phenolic ring, and where $R^{13}$ is a hydrogen atom or an alkyl group of from 1 to 6 carbon atoms.

**Revendications**

1. Procédé pour préparer des produits résineux diluables à l'eau, procédé caractérisé en ce qu on fait réagir ensemble :

(A) une résine à au moins un radical hydroxy phénolique et à une position libre en ortho et/ou en para relativement au radical hydroxy phénolique, résine qui contient un radical formé par polymérisation d'un monomère vinylique dans la résine ou un précurseur de celle-ci,

(B) un aldéhyde et

(C) de l'acide sulfurique, ou un acide organique contenant un radical amino primaire ou secondaire ou un radical mercaptan et un radical d'acide carboxylique, d'acide sulfonique ou d'acide phosphonique, ou un sel hydrosoluble d'un tel acide.

2. Procédé selon la revendication 1 dans lequel (A) est une résine que l'on a obtenue en faisant réagir une résine époxydique avec un polyphénol qui a une position libre en ortho et/ou en para relativement au radical hydroxy phénolique, de manière à obtenir une résine à radicaux phénoliques terminaux, et en polymérisant un monomère vinylique dans la résine à radicaux phénoliques terminaux.

3. Procédé selon l'une des revendications 1 et 2, dans lequel (A) est une résine que l'on a obtenue en polymérisant un monomère vinylique dans une résine époxydique contenant un radical hydroxy alcoolique secondaire, et en faisant réagir le produit obtenu avec un polyphénol qui a une position libre en ortho et/ou en para relativement au radical hydroxy phénolique, de manière à obtenir une résine à radicaux phénoliques

terminaux.

4. Procédé selon l'une des revendications 2 et 3, dans lequel le polyphénol est un bis-phénol répondant à la formule I :

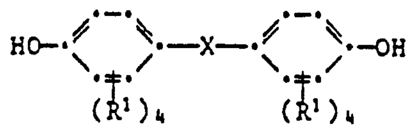
(I)

dans laquelle les $R^1$ représentent chacun, indépendamment les uns des autres, un atome d'hydrogène, un atome d'halogène, un alkyle contenant de 1 à 4 atomes de carbone ou un alcényle en $C_2$-$C_4$, avec la condition qu'au moins l'un des $R^1$ en ortho par rapport à un des radicaux hydroxy phénoliques soit un atome d'hydrogène, et X représente un radical alkylène ou alkylidène en $C_1$-$C_3$, un radical carbonyle ou sulfonyle, un atome d'oxygène ou de soufre ou une liaison covalente.

5. Procédé selon l'une quelconque des revendications 2 à 4, selon lequel on mélange le monomère vinylique, associé à un amorceur de polymérisation générateur de radicaux libres, avec la résine à radicaux phénoliques terminaux, le précurseur de la résine époxydique ou une solution de ceux-ci dans un solvant organique, et on chauffe le mélange à 60 - 200°C.

6. Procédé selon l'une quelconque des revendications 1 à 5, selon lequel on utilise le monomère vinylique en une quantité telle qu'elle représente au plus 50 % en poids de la résine (A).

7. Procédé selon l'une quelconque des revendications 1 à 6, selon lequel le monomère vinylique est un styrène, l'acide acrylique, l'acide méthacrylique ou un ester de ces acides, l'acrylamide, le méthacrylamide ou un dérivé hydroxyalkylique de ceux-ci, un ester vinylique d'acide carboxylique ou un mélange de deux ou de plus de deux de ces composés.

8. Procédé selon l'une quelconque des revendications 5 à 7, selon lequel l'amorceur de polymérisation est un peroxyde ou un composé azoïque et est présent en une quantité de 1 à 20 % en poids par rapport au monomère.

9. Procédé selon l'une quelconque des revendications 1 à 8, selon lequel l'aldéhyde (8) est un aldéhyde aliphatique contenant de 1 à 6 atomes de carbone.

10. Procédé selon l'une quelconque des revendications 1 à 8, selon lequel la composante (C) est un acide mercapto-carboxylique répondant à la formule IV :

$HS$-$R^7$-$COOH$ (IV)

dans laquelle $R^7$ représente un radical bivalent aliphatique, aromatique ou araliphatique qui contient au plus 10 atomes de carbone et qui peut contenir un radical carboxy supplémentaire, ou un acide aminocarboxylique répondant à la formule V :

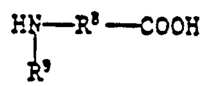
(V)

dans laquelle

$R^8$ représente un radical bivalent aliphatique, aromatique ou araliphatique à au plus 10 atomes de carbone, qui peut contenir un radical carboxy supplémentaire,

$R^9$ représente un atome d'hydrogène, un radical de formule VI

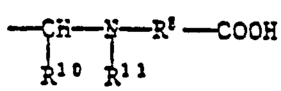
(VI)

ou un radical alkyle en $C_1$-$C_6$ qui peut porter un radical carboxy supplémentaire ou un radical de formule -$CH(R^{10})OH$ ou de formule -$CH(R^{10})OR^{12}$, avec la condition que $R^8$ et $R^9$, considérés ensemble, ne contiennent pas plus d'un radical carboxy,

$R^{10}$ représente un atome d'hydrogène, un alkyle en $C_1$-$C_4$ ou un aryle en $C_6$-$C_{10}$,

$R_{11}$ représente un atome d'hydrogène, un radical carboxy ou un radical alkyle en $C_1$-$C_6$ qui peut porter un radical carboxy ou un radical de formule -$CH(R^{10})OH$ ou de formule -$CH(R^{10})OR^{12}$, et

-$R^{12}$ représente un alkyle en $C_1$-$C_6$ ou un alcoxyalkyle dans lequel les radicaux alcoxy et alkyle contiennent chacun de 1 à 6 atomes de carbone.

11. Procédé selon la revendication 10 selon lequel la composante (C) est la glycine, l'acide glutamique, l'acide aspartique , l'acide p-amino-benzoïque, la sarcosine ou l'acide mercapto-acétique.

12. Procédé selon l'une quelconque des revendications précédentes, selon lequel on chauffe les composantes (A), (B) et (C) ensemble dans un solvant inerte, en présence d'une base utilisée en une quantité suffisante pour provoquer une neutralisation au moins partielle de l'acide libre éventuellement présent, à des températures comprises entre 60 et 180° C.

13. Procédé selon l'une quelconque des revendications précédentes, selon lequel on utilise de 0,3 à 2,0 mol de la composante (C) par mole de radicaux hydroxy phénoliques dans (A), et de 1,1 à 4,0 mol de la composante (B) par mole de la composante (C).

14. Composition thermodurcissable qui contient 100 parties en poids, relativement à la teneur en matière solide (telle que définie ci-dessus), d'un produit obtenu par un procédé selon l'une quelconque des revendications 1 à 13 précédentes, et de 2 à 200 parties en poids, relativement à la teneur en matière solide, d'un aminoplaste, d'une résine phénol/formaldéhyde ou d'un poly-isocyanate masqué, l'aminoplaste ou la résine phénol/ formaldéhyde contenant au moins deux radicaux de formule VII :

$-CH_2OR^{13}$ (VII)

(dans laquelle $R^{13}$ représente un atome d'hydrogène ou un radical alkyle contenant de 1 à 6 atomes de carbone) liés directement a des atomes d'azote amidiques ou à des atomes de carbone d'un cycle phénolique.